Europäisches Patentamt

European Patent Office

Office européen des brevets

(19)

(11) Publication number: **0 015 115**
**B1**

(12) **EUROPEAN PATENT SPECIFICATION**

(45) Date of publication of patent specification: **01.02.84**

(21) Application number: **80300410.0**

(22) Date of filing: **13.02.80**

(51) Int. Cl.³: **B 01 J 20/22,** C 08 F 8/50,
**B 01 D 53/02**

(54) Process for making partially pyrolyzed polymer particles.

(30) Priority: **15.02.79 US 12272**

(43) Date of publication of application:
**03.09.80 Bulletin 80/18**

(45) Publication of the grant of the patent:
**01.02.84 Bulletin 84/5**

(84) Designated Contracting States:
**BE CH DE FR GB IT NL SE**

(56) References cited:
**FR - A - 2 124 356**
**FR - A - 2 246 302**
**FR - A - 2 322 876**
**US - A - 3 976 629**
**US - A - 4 040 990**

**JOURNAL OF POLYMER SCIENCE, vol. XXXIII,
1958, John Wiley & Sons, Inc. New York USA
V.E. SHASHOUA: "Microgel: An Idealized
Polymer Molecule", pages 101-117**

(73) Proprietor: **Rohm and Haas Company
Independence Mall West
Philadelphia, Pennsylvania 19105 (US)**

(72) Inventor: **Neely, James Watson
504 Martin Lane
Dresher, Pennsylvania 19025 (US)**
Inventor: **Chong, Berni Patricia
504 Martin Lane
Dresher, Pennsylvania 19025 (US)**

(74) Representative: **Angell, David Whilton et al,
Rohm and Haas Company Patent Department
Chesterfield House Bloomsbury Way
London WC1A 2TP (GB)**

Courier Press, Leamington Spa, England.

# Process of making partially pyrolyzed polymer particles

This invention is concerned with processes of making partially pyrolyzed carbonaceous, adsorbent polymer particles.

Partially pyrolyzed, macroporous, polymer adsorbent particles derived from suspension-polymerized polymer beads containing carbon-fixing moieties are disclosed by Neely in U.S. Patent Specification No. 4,040,990. Such macrospherical materials are referred to herein as "carbonaceous, macroporous polymer adsorbents" and have shown highly useful adsorbent properties, particularly in such applications as removing impurities, e.g. sulfur compounds, monomers and other industrial contaminants or pollutants, from gases, and purifying pollutant-containing liquid streams, such as waste streams containing phenolics or blood containing barbiturates. As those particles are derived by suspension polymerization, their physical form is beads having approximately the same diameters as conventional macrospherical ion-exchange beads, that is, from about 0.05 to about 1 millimeter.

Adsorbents of the prior art particle size range, when used at economically attractive flow rates for large-scale treatment of gases or liquids, cause large pressure drops across packed beds of the adsorbents. The problems of pumping liquids against these large pressure drops have, in some instances, partially offset the advantages of the carbonaceous, macroporous polymer adsorbents over granular activated carbon.

We have now discovered a process for making a class of partially pyrolyzed polymer particles which exhibit many of the desirable adsorbent properties of the carbonaceous, macroporous polymer particles of the Neely Patent specification, but which have significantly different particle sizes and therefore different physical properties. The partially pyrolyzed polymer particles made by this invention are derived from microspheres, of an emulsion polymer, having a size smaller than 2 $\mu$m and a preferred size range of about 0.05 to about 1 $\mu$m. In the process of the invention an emulsion of the microspheres, i.e. the emulsion product of the polymerization process, is coagulated and the coagulum pyrolyzed. The pyrolysis occurs in the presence of a carbon-fixing moiety; this may be introduced by its presence in the monomers from which the particles are polymerized, it may be introduced by chemical reaction into the coagulum prior to pyrolysis, or it may be introduced by contact with the coagulum during heating for pyrolysis. Any of the carbon-fixing moieties described in the Neely U.S. Patent is suitable.

Large, non-spherical, highly porous particles of partially pyrolyzed polymer having excellent hydraulic properties in high-flow-rate applications are preferably prepared by coagulating an emulsion of the microsphere polymer particles, introducing a carbon-fixing moiety to the coagulum, and partially pyrolyzing the coagulum containing the carbon-fixing moiety.

The polymer particles to be pyrolyzed are prepared by emulsion polymerization, wherein the monomers are emulsified in an aqueous medium with the aid of a surface-active agent, and polymerization is initiated with a water-soluble initiator. Suitable emulsion polymerization coagulation and redispersion techniques are further described in the specifications of copending European Patent Applications 79301937.3, 79301938.1, 79301936.5, 79301939.9 and 79301940.7. The suitable monomers for emulsion polymerization to prepare the adsorbents are typically mixtures of monoethylenically unsaturated monomers and polyethylenically unsaturated crosslinker monomers, but materials useful in preparing the adsorbents of this invention may be prepared from sequential emulsion polymer particles having crosslinked copolymer cores and uncrosslinked surfaces, or from uncrosslinked emulsion polymer particles. At least a portion of the monomer emulsions used in preparing such sequential materials contains monoethylenically unsaturated monomer but no polyethylenically unsaturated monomer. Suitable monomers, both monoethylenically and polyethylenically unsaturated, for use in preparing polymer emulsions for pyrolysis are discussed by Neely in U.S. Patent Specification 4,040,990.

The carbon-fixing moiety may be introduced, to a polymer as described in the European Patent Applications mentioned above, by coagulating the polymer emulsions and functionalizing the coagulum using conventional functionalization reactions, it may be present in one or more components of the monomer or monomer mixture (e.g., vinylidene chloride), or in a more preferred embodiment the polymer emulsion may be coagulated and the carbon-fixing moiety subsequently introduced during heating to sub-pyrolysis temperatures by contacting the polymer emulsion with a coagulating and functionalizing reagent such as sulfuric acid. In a preferred embodiment an emulsion copolymer of styrene and commercial divinylbenzene is coagulated by a sulfuric acid solution having a concentration such that 1 to 2 moles of sulfuric acid are incorporated into the pores of the coagulum for each equivalent of copolymer. During the heating cycle in the pyrolysis oven, sulfonation of the copolymer occurs at temperatures below the pyrolysis temperature range. Levels of sulfuric acid higher than 2 moles per equivalent of copolymer may be employed to modify the properties of the pyrolyzed product. Other carbon-fixing moieties include sulfonate, carboxyl, amine, halogen, oxygen, sulfonate salts, carboxylate salts and quaternary amine salts. The need for carbon-fixing moiety in polymers to be pyrolyzed, as well as suitable further reagents and reactions for introducing carbon-fixing moieties, are disclosed by Neely in U.S. Patent Specification No. 4,040,990. The coagulum to be pyrolyzed is preferably drained of any free liquid, and is pyrolyzed as described by Neely. Products with useful adsorbent properties are controlled by controlling the pyrolysis temperature. The pore structure and chemical composition of the pyrolyzed material are controlled by selecting temperatures within the permitted range, and different temperatures give different adsorption properties. A more preferred pyrolysis temperature range is between 300°C and 1200°C, and the most preferred range is between 500°C and 800°C. When a water wet coagulum is pyrolyzed, the preferred procedure is to use an inert gas blanket and hold the coagulum temperature between about 100°C and the lowest pyrolysis temperature, and most preferably at about 200°C, until the water is removed, after which the coagulum is heated to pyrolysis temperature. Pyrolysis time is not critical, the maximum pyrolysis temperature having a far greater effect on product properties than the time spent at that temperature. Pyrolysis time is further discussed by Neely in U.S. Patent No. 4,040,990. Following pyrolysis the partially pyrolyzed material is allowed to cool, preferably still with the inert gas blanket to avoid oxidation.

The pyrolyzed materials of this invention have a carbon-to-hydrogen ratio from 1.5:1 to 20:1, and a carbon content of at least 85% by weight. The remainder may typically be principally hydrogen, alkali metals, alkaline earth metals, nitrogen, oxygen, sulfur, chlorine, derived from the polymer of the carbon-fixing moiety.

Because the particle size of the coagulum may be controlled over a wide range, significantly lower pressure drops may be achieved at high flow rates across a bed of the highly porous, partially pyrolyzed coagulum particles than across a bed of conventionally sized, carbonaceous polymer adsorbent beads as disclosed in the Neely patent mentioned above. The coagulation techniques which provide this control of particle size include, but are not limited to, dropping, extruding or otherwise introducing the emulsion into a coagulant liquid, introducing coagulant to the emulsion while the latter is mixed at various rates, freezing and thawing the emulsion, stirring it vigorously, or drying it to a cake.

In the following Examples there are set out some preferred embodiments of the invention for the purposes of illustration only. All percentages are by weight unless otherwise stated, and all reagents are of good commercial quality.

Preparation A

This illustrates the preparation of a styrene-divinylbenzene emulsion copolymer. A mixture of 41.3 g of commercial divinylbenzene (55.2% divinylbenzene, remainder substantially ethylvinylbenzene) and 148.7 g of styrene was added to a dispersion of 25.4 g of Triton X-200 (Rohm and Haas Company, Philadelphia, Pa; tradename for a 28% solids dispersion of sodium alkyl aryl polyether sulfonate) in 380 g of deoxygenated water, blanketed with nitrogen gas, and stirred vigorously to form a monomer emulsion. In a separate container 1 g of potassium persulfate was dissolved in 50 g of deoxygenated water and blanketed with nitrogen; to this was added 100 ml of the monomer emulsion. The mixture was stirred to form a 1-inch vortex, and was heated under the nitrogen blanket to 70°C. The mixture was observed for the start of polymerization, indicated by a decrease in the opacity of the mixture. At that time addition of the remaining monomer emulsion was begun at such a rate that addition of all the remaining emulsion required 4 hours. After half of the remaining emulsion had been added, the mixture was heated and held at 75°C. A second monomer emulsion was prepared from 10 g of the commercial divinylbenzene, 1.3 g of the Triton X-200 and 20 g of deoxygenated water. Dropwise addition of this second emulsion was begun 30 minutes after addition of the first emulsion was complete. When addition of the second emulsion was complete the mixture was heated and held at 85°C for 3 hours, cooled to room temperature and filtered through cheesecloth. The solids content of the resulting emulsion was 28.8% by weight, compared to a theoretical value of 30.7% by weight.

Preparation B

This illustrates a simultaneous coagulation of the copolymer emulsion of Preparation A, and imbibing of a sulfuric acid carbon-fixing moiety into the coagulum. An acid bath was prepared from 974 ml (179.4 g) of 97% sulfuric acid and 2071 g of ice. Into this 193 g of the copolymer emulsion of Preparation A was slowly poured. When the addition was complete, the mixture was stirred for 0.5 hours to ensure complete equilibrium of the acid, and the coagulum was drained. The calculated weight ratio of sulfuric acid to copolymer in the coagulum was 1.35 g $H_2SO_4$/g copolymer.

Example 1

This illustrates the pyrolysis of the sulfuric acid-imbibed coagulum of Preparation B to prepare carbonaceous particles of the present invention. The drained coagulum of Preparation B was transferred to a quartz tube of 2.51-cm-diameter, blocked at one end with quartz wool. The tube was placed in a horizontal tube furnace and was swept with nitrogen gas at a flow rate of two liters per minute. The furnace was heated to 100°C over 30 minutes, held at 100°C for 1.0 hour, heated to 200°C over 30 minutes, held at 200°C for 2.5 hours, heated to 500°C over 30 minutes and held at 500°C for 1.0 hour. A colour change from white to pink was observed during the time at 100°C and 200°C. The pyrolyzed product was a dull black, granular solid with physical appearance and friability similar to granular activated carbon. Properties of the product are shown in the following table, with properties of a pyrolyzed, carbonaceous adsorbent bead of U.S. Patent No. 4,040,990 shown for comparison.

TABLE I

| Properties | Product of Example 1 | Comparison product of U.S. 4,040,990 |
|---|---|---|
| Surface Area m$^2$/g | 440 | 430 |
| Skeletal Density g/cc | 1.40 | 1.32 |
| Porosity cc/cc | 0.49 | 0.33 |
| Chloroform in Water Batch Equilibrium Capacity mg/g at ppm | 85 at 3.4 | 74.8 at 7.8 |
| Particle Size Distribution U.S. Standard Sieve | Cumulative % Retained | |
| (No. 4) 4.76 mm | 0 | 0 |
| (No. 6) 3.36 mm | 0.5 | 0 |
| (No. 10) 2.0 mm | 12.6 | 0 |
| (No. 12) 1.68 mm | 38.0 | 0 |
| (No. 16) 1.19 mm | 76.1 | 0 |
| (No. 20) 0.84 mm | 87.7 | 3.9 |
| (No. 30) 0.59 mm | | 51.4 |
| (No. 40) 0.42 mm | | 75.1 |
| (No. 60) 0.25 mm | | 100.0 |
| Elemental Analysis | | |
| %C | 90.7 | 91.7 |
| %H | 3.7 | 3.5 |
| %O | 2.95 | 1.4 |
| %S | 3.05 | 2.5 |

The chloroform adsorption test is performed in the following manner. A 0.1 g sample of adsorbent is placed in a 250-ml wide-mouth jar, and 200 ml of a 50-ppm chloroform in water mixture is transferred to the jar by pipette. The jar is capped and shaken for 24 hours, following which the residual chloroform content of the water is determined by a gas chromatographic analysis.

Preparation C

This illustrates the preparation of an emulsion copolymer having a crosslinked core and an uncrosslinked surface. A monomer emulsion was prepared by mixing under nitrogen 320 g of deoxygenated, deionized water, 20.2 g of 28% Triton X-200, 116.5 g styrene, and 43.5 g of 55.2% divinylbenzene (balance essentially ethylvinylbenzene), and stirring vigorously. A 100-ml portion of this emulsion was mixed under nitrogen with 1.00 g potassium persulfate dissolved in 50 ml of deoxygenated, deionized water, and the mixture was heated and held at 70°C for 30 minutes, after which the remaining emulsion was added dropwise over a period of 2.5 hours at 70°C to form the crosslinked core emulsion. A second monomer emulsion was prepared by mixing 80 g deoxygenated, deionized water, 5.8 g of 28% Triton X-200 and 40 g of styrene, and this second emulsion was added to the crosslinked core emulsion over a period of one hour at 70°C. Following this addition the emulsion was heated and held at 85°C for 30 minutes, then cooled to room temperature while stirring, and filtered through cheesecloth. The resulting emulsion had a solids content of 29.5%, versus a calculated solids content of 30.7%, and the emulsion particles had a diameter of approximately 0.1 micrometer. The crosslinked core comprised about 80% of each particle, and the uncrosslinked surface about 20%.

Example 2

This illustrates the sulfonation and pyrolysis of the emulsion copolymer of Preparation C. The copolymer emulsion of Preparation C was coagulated by adding 50 ml of the emulsion dropwise to 200 ml of concentrated sulfuric acid, mixing, and allowing the mixture to stand at room temperature for 10 days. The coagulum was filtered, mixed with fresh, concentrated sulfuric acid, heated to 125°C and held at that temperature for 2.5 hours. The mixture was cooled to room temperature and poured into water. The supernatant liquid was decanted and the remaining solids were mixed with water and drained. The drained solids were pyrolyzed according to the procedure of Example 1, at 100°C for 1.5 hours and at 500°C for 1.0 hours. The resulting product was dull black, free-flowing granules with adsorption properties similar to the product of Example 1.

4

**Preparation D**

This illustrates the preparation of an ultrafine-particle-size emulsion having 60% styrene core crosslinked with 32.7% divinylbenzene and 40% uncrosslinked styrene surface, and having an emulsion particle size of 0.05 micrometer. A reaction vessel was charged with 250 g of deoxygenated, deionized water, 35 g of 23% Siponate DS-4 (Alcolac Inc., Baltimore, MD, trademark for dodecylbenzenesulfonic acid sodium salt) and 0.8 g of potassium persulfate dissolved in 50 g deionized water. The mixture was heated and held at 85°C, and an emulsion of 54 g of deoxygenated, deionized water, 2.7 g of Siponate DS-4, 72.5 g of 55% divinylbenzene (balance essentially ethylvinylbenzene) and 50 g of styrene was added over a period of 5.5 hours. A solution of 0.2 g potassium persulfate in 50 ml deoxygenated water was added, and a second monomer emulsion of 36 g of deoxygenated water, 1.1 g of Siponate DS-4, and 77.5 g of styrene was added over a period of 3.0 hours. After addition of the second monomer emulsion, the reaction mixture was chased with 0.4 g potassium persulfate dissolved in 75 ml deoxygenated water, then held at 85°C for 13 hours, cooled to room temperature, and filtered through cheesecloth. The solids content was 26.3% versus a calculated solids content of 30.7%.

**Example 3**

The emulsion polymer product of Preparation D was coagulated, sulfonated and pyrolyzed according to the procedure of Example 2, to produce dull-black granules.

**Preparation E**

This illustrates the preparation of a large-particle-size emulsion (particle diameter approximately 0.4 micrometer). A preformed emulsion polymer having particle size of about 0.1 micrometer, a divinylbenzene crosslinker content of 7%, and a solids content of 40 to 45% was prepared according to the procedure of Preparation A, and 25.0 g of this polymer was mixed with 348 g deoxygenated deionized water, heated and held at 90°C. To the mixture 1.2 g of ammonium persulfate dissolved in 50 ml deoxygenated, deionized water, was added, and after 30 seconds the dropwise addition of an emulsion of 180 g deoxygenated, deionized water, 12.9 g Triton X-200, 0.72 g ammonium persulfate, 314 g of styrene and 45.8 g of 55% divinylbenzene (balance essentially ethylvinylbenzene) was begun. This emulsion was added to the preformed emulsion polymer mixture over a period of 2 hours, and a second emulsion of 20 g deoxygenated, deionized water, 1.4 g Triton X-200, 0.08 g ammonium persulfate, 37.6 g styrene and 0.4 g of 55% divinylbenzene was added dropwise over 10 minutes. The emulsion was held at 90°C for an additional 30 minutes, cooled to room temperature over a 30 minute period and filtered through cheesecloth. The product emulsion contained 39.1% solids.

**Example 4**

This illustrates the sulfonation and pyrolysis of the emulsion of Preparation E. To 92 ml of deionized water 108 ml of concentrated sulfuric acid was added; the resulting solution reached a temperature of 130°C. To this hot sulfuric acid solution 51 ml of the emulsion of Preparation E was added, and the mixture was stirred for 5 minutes. The resulting coagulum was filtered, drained, and pyrolyzed according to the procedure of Example 1.

**Example 5**

This illustrates the chlorination of the pyrolyzed emulsion coagulum from Example 3. Chlorination provides information on the relative activity of adsorbents, and the maximum temperature reached within the adsorbent bed during treatment with chlorine $(T_{max})$ correlates closely to the effectiveness of the adsorbent for removing chloroform from water. A 1 g sample of the pyrolyzed material from Example 3 was transferred to a 1 cm-diameter glass tube, and held in place with glass wool. The tube was clamped in a vertical position, a temperature probe was inserted in the pyrolyzed material, and chlorine gas was passed upward through the sample. The maximum temperature indicated by the temperature probe $(T_{max})$ was 233°C. After chlorine breakthrough, the sample was transferred to an oven and held at 110°C overnight to drive off any adsorbed, unreacted chlorine. The sample was subsequently cooled to room temperature and weighed. The weight change,

$$\%\Delta \, Wt. = \frac{Final \; Wt. — Initial \; Wt.}{Initial \; Wt.} \times 100,$$

indicates the total amount of chlorine reacted.

Samples prepared according to the procedures of Examples 2 and 4 were also chlorinated; results are indicated in Table II.

TABLE II

| Sample | T$_{max}$ | Δ Wt. |
|---|---|---|
| Material from Example 3 | 233°C | 46.1% |
| Material from Example 2 | 87°C | 28.5% |
| Material from Example 4 | 201°C | 41.6% |

## Claims

1. A process for the production of partially pyrolysed particles of a synthetic polymer derived from one or more ethylenically unsaturated monomers, by subjecting the polymer to controlled thermal degradation in the presence of a carbon fixing moiety at a temperature of 300 to 2,800°C in an inert gaseous atmosphere so as to drive off sufficient volatile components to yield partially pyrolysed, adsorbent carbonaceous particles containing at least 85% by weight of carbon and having a carbon to hydrogen atom ratio of 1.5:1 to 20:1, characterised in that the polymer is formed by emulsion polymerisation and is coagulated before being subjected to thermal degradation, the emulsion polymer comprising microspheres having diameters smaller than two micrometers.

2. A process as claimed in claim 1, wherein at least one of the monomers contains a carbon-fixing moiety as a substituent group.

3. A process as claimed in claim 1 in which a carbon-fixing moiety is added to the polymer by reaction after coagulation but before pyrolysis.

4. A process as claimed in any preceding claim, wherein the carbon-fixing moiety comprises one or more of: sulfonate, carboxyl, amine, halogen, oxygen, sulfonate salt, quaternary amine, quaternary amine salt.

5. A process as claimed in claim 4, wherein the carbon-fixing moiety comprises the sulfonate moiety.

6. A process as claimed in any preceding claim, wherein the temperature is between 300 and 1200°C.

7. A process as claimed in claim 6, wherein the temperature is between 500 and 800°C.

8. A process as claimed in any of claims 4 to 7, wherein the thermal degradation is carried out with the microspheres in contact with a reagent which supplies a carbon-fixing moiety.

9. A process as claimed in claim 8, wherein the reagent also effects the coagulation.

10. A process as claimed in claim 8 or 9, wherein the reagent is sulfuric acid.

## Revendications

1. Un procédé pour la fabrication de particules partiellement pyrolysées d'un polymère synthétique dérivé d'un ou de plusieurs monomères éthyléniques insaturés, en soumettant le polymère à une dégradation thermique contrôlée en présence d'un motif fixant le carbone à une température de 300 à 2800°C dans une atmosphère de gaz inerte de manière à chasser suffisamment de composés volatils pour produire des particules carbonées, adsorbantes, partiellement pyrolysées, contenant au moins 85% en poids de carbone et ayant un rapport atomique carbone/hydrogène de 1,5:1 à 20:1, caractérisé en ce que le polymère est formé par polymérisation en émulsion et est coagulé avant d'être soumis à la dégradation thermique, le polymère en émulsion comprenant des microsphères ayant des diamètres inférieurs à deux micromètres.

2. Un procédé comme revendiqué dans la revendication 1, dans lequel au moins un des monomères contient un motif fixant le carbone comme groupe substituant.

3. Un procédé comme revendiqué dans la revendication 1, dans lequel un motif fixant le carbone est ajouté au polymère par réaction après coagulation mais avant pyrolyse.

4. Un procédé comme revendiqué dans toute revendication précédente, dans lequel le motif fixant le carbone comprend un ou plusieurs motifs: sulfonate, carboxyle, amine, halogène, oxygène, sel de sulfonate, amine quaternaire, sel d'amine quaternaire.

5. Un procédé comme revendiqué dans la revendication 4, dans lequel le motif fixant le carbone comprend le motif sulfonate.

6. Un procédé comme revendiqué dans toute revendication précédente, dans lequel la température est entre 300 et 1200°C.

7. Un procédé comme revendiqué dans la revendication 6, dans lequel la température est comprise entre 500 et 800°C.

8. Un procédé comme revendiqué dans l'une quelconque des revendications 4 à 7, dans lequel la dégradation thermique est réalisée avec les microsphères en contact avec un réactif qui fournit un motif fixant le carbone.

9. Un procédé comme revendiqué dans la revendication 8, dans lequel le réactif produit également la coagulation.

10. Un procédé comme revendiqué dans la revendication 8 ou 9, dans lequel le réactif est l'acide sulfurique.

**0 015 115**

**Patentansprüche**

1. Verfahren zur Herstellung von teilwise pyrolysierten Teilchen aus einem synthetischen Polymeren, das auf eines oder mehrere ethylenisch ungesättigte Monomere zurückgeht, durch gesteuerten thermischen Abbau des Polymeren in Gegenwart eines kohlenstoffixierenden Anteils bei einer Temperatur von 300 bis 2.800°C in einer inerten gasförmigen Atmosphäre zum Austreiben einer ausreichenden Menge flüchtiger Komponenten unter Gewinnung von teilweise hydrolysierten adsorbierenden kohlenstoffhaltigen Teilchen, die wenigstens 85 Gew.-% Kohlenstoff enthalten und ein Kohlenstoff:Wasserstoff-Atomverhältnis von 1,5:1 bis 20:1 aufweisen, dadurch gekennzeichnet, daß das Polymere durch Emulsionspolymerisation gebildet wird und vor dem thermischen Abbau koaguliert wird, wobei das Emulsionspolymere aus Mikrokügelchen besteht, deren Durchmesser kleiner sind als 2 Mikrometer.

2. Verfahren nach Anspruch 1, dadurch gekennzeichnet, daß wenigstens eines der Monomeren einen kohlenstoffixierenden Anteil als Substituentengruppe enthält.

3. Verfahren nach Anspruch 1, dadurch gekennzeichnet, daß ein kohlenstoffixierender Anteil dem Polymeren durch Umsetzung nach der Koagulation, jedoch vor der Pyrolyse, zugesetzt wird.

4. Verfahren nach einem der vorhergehenden Ansprüche, dadurch gekennzeichnet, daß der kohlenstoffixierende Anteil aus einem oder mehreren der folgenden Bestandteile besteht: Sulfonat, Carboxyl, Amin, Halogen, Sauerstoff, Sulfonatsalz, quaternärem Amin, quaternärem Aminsalz.

5. Verfahren nach Anspruch 4, dadurch gekennzeichnet, daß der kohlenstoffixierende Anteil aus einem Sulfonatanteil besteht.

6. Verfahren nach einem der vorhergehenden Ansprüche, dadurch gekennzeichnet, daß die Temperatur zwischen 300 und 1.200°C liegt.

7. Verfahren nach Anspruch 6, dadurch gekennzeichnet, daß die Temperatur zwischen 500 und 800°C liegt.

8. Verfahren nach einem der Ansprüche 4 bis 7, dadurch gekennzeichnet, daß die thermische Zersetzung mit den Mikrokügelchen in Kontakt mit einem Reagens durchgeführt wird, das einen kohlenstoffixierenden Anteil liefert.

9. Verfahren nach Anspruch 8, dadurch gekennzeichnet, daß das Reagens auch die Koagulation bewirkt.

10. Verfahren nach Anspruch 8 oder 9, dadurch gekennzeichnet, daß das Reagens aus Schwefelsäure besteht.